# EUROPÄISCHE PATENTANMELDUNG

(11) **EP 2 529 909 A1**
(43) Veröffentlichungstag der Anmeldung: **05.12.2012**
(21) Anmeldenummer: 11004560.6
(22) Anmeldetag: 04.06.2011
(51) Int. Cl.: B29B 11/16, B29C 70/22

(54) **Verfahren zur Herstellung von Laminaten und der Verbesserung bei Drapierungen bei technischen Textilien als Fixiermethode, Composites und Verstärkungsstrukturen.**

(71) Anmelder: Szukat, Klaus, 03792 Parcent (Alicante) (ES); Scholten, Fritz, Sausalito, CA 94965 (US)
(72) Erfinder: Szukat, Klaus, 03792 Parcent (Alicante) (ES); Scholten, Fritz, Sausalito, CA 94965 (US)
(74) Vertreter: Demski, Siegfried

(57) **Zusammenfassung**

Die Erfindung betrifft ein Mehrschichtlaminat oder Verstärkungsfaserstruktur als Bauteil oder flächigem Material für hochfeste Bauteile. Um eine Aufspleißung der Verstärkungsfasterstruktur im Kantenbereich zu vermeiden ist vorgesehen, dass sich ein Aufbau aus Lagen oder Schichten ergibt, die einmal aus erforderlichen Faserausrichtungen bestehen, aber auch Lagen und Schichten aufweisen, die Faser- bzw. Filamenthaltungen zur Folge haben und durch Verpressung unter Hitzeeinwirkung in die endgültige Form gebracht werden.

## Beschreibung

Die Erfindung betrifft ein Verfahren, in dem im Ergebnis ein Fertigprodukt oder ein Teil- oder Halbfertigprodukt mit Problemlösungen der notwendigen Drapierbarkeit bei konvexen oder sonstigen Problemstellen hergestellt wird.

Im Vergleich zu technischen Textilien als Gewebe, sind Gelege, multiaxiale vernähte Gelege oder auch multidirektionale unvernähte Gelege oder auch Geflechte nur begrenzt zu Drapieren.

Das hier vorliegende Verfahren hat zum Ergebnis, Verformbarkeiten von mehrschichtigen multikomplexen Gelegen mittels Verpressung in eine endgültige Form zu ermöglichen unter Fixierung der Einzelfilament und Fasern in relativer Lage zueinander.

Die Verformbarkeit ist im erfindungsgemäßen Verfahren durch Heißpressen in die endgültige Form möglich.

Als Ausgangsmaterial für dieses Verfahren werden z.B. Materialien als Endlosware oder auch als Teilware angesetzt, wie z.B. als viel-oder mehrschichtige Faserkomplexe in der Luft- und Raumfahrt, Schiffsbau, Windkraftanlagen, Schienenfahrzeuge, Containerbau, Automobilindustrie, Nutzfahrzeuge etc.
Die Erfindung soll auch im übertragenen Sinne Bauteilkomponenten jeder Art und Größe als Mehrschichtkomplexe einschließen.

In allen bisher bekannten Verfahren werden bei Drapierungen an Problemstellen die bereits gelegten Fasern oder Filamente in der gelegten Struktur je nach Stärke der Drapierung aufgerissen, in der nebeneinanderliegenden Ordnung getrennt, schädigen so die Stabilität und sind nicht mehr berechenbar.

Die Erfindung hat sich zum Ziel gesetzt, genau diese Aufspleißung zu vermeiden und die gelegten Fasern und Filamente an ihrem Platz zu halten, ohne die notwendige Struktur des Geleges schädigend zu beeinflussen, sondern eher sogar zu stärken.

In der folgenden Beschreibung wird dies an der Herstellung eines Autodaches dargestellt.

Vom grundsätzlichen Sinne her bezieht sich die Erfindung auf flächige oder gestaltete Bauteile aus Faserverbundwerkstoffen aus vernähten oder unvernähten Gelegen (UD, oder MD mit verschiedenen Faserrichtungen, z.B. +-45° oder auch +45°/0°/-45°), Geweben, Geflechten, Gewirken, Vliesen, Matten etc.
UD= unidirektionale Faserlagen, MD=multidirektionale Faserlagen

Vorschlag zur Lösung dieser Aufgabe kann einmal die gezielte Vernähung von Problemstellen durch 3-Dimensional arbeitenden Nähkopf sein oder aber auch die Verfestigung der Einzelfilamente mittels zusätzlich haltende Auftragungen wie Haftfadengitter, Klebenetze mit entsprechender Ausgestaltung, ganzflächige Klebefolien oder auch ganzflächige Wirrfaserfolien bzw. Wirrfaserfolien an ausgesuchten vorberechneten Stellen im Composite.Denkbar ist auch den Begriff Fusselfäden, Fixierstoffeim Zusammenhang mit Wirrfasern zu verwenden. Ausgangsprodukt der Wirrfasern kann neben "*Neufasern*" auch ein Recyclematerial, z.B. auch aus Pyrolyse (Verbrennung) oder sovolytisch (chemisch) sein, also interessant für die Faserabfallverwendung; kostengünstige und ökologische Vorteile.

Die Erfindung hat zum Ziel, einmal die Haftung der theoretisch geradlinig ausgerichteten nebeneinanderliegenden Filamente oder Fasern an der vorbedachten, vorgefertigten Ordnung während der mechanischen Weiterbearbeitung zu halten bzw. zu festigen.

Schichtig eingebrachte Abstandsgewirke zur Verbesserung der Infiltrierungen sind gleichfalls Betrachtung der Erfindung.

Über das Beispiel an einem Autodach hinaus hat die Erfindung ebenfalls zum Ziel, Filamente oder Fasern an jede Form der Bindung zu halten, also auch an nicht theoretisch paralleler Anordnung sondern gewollt nicht paralleler, also z.B. Wellenform, um so dem Teilfertig- oder Fertigprodukt eine gewisse gewollte Elastizität, Nachgiebigkeit(Krafteinleitung bei Schub und Zug) in eine oder mehrere Richtung zu verleihen.

Hierbei ist auch daran gedacht, den zeitlichen Verlauf einer Verpressung, z.B. Autodach, in eine Form so auszuprägen, dass ein Geschwindigkeitsverlauf der Verpressung eine gewollte Aufspleißung der Filamente und Fasern bis zu einem bestimmten Grad zulässt und durch Beschleunigung der Verpressung im zeitlichen Ablauf und Verstärkung des Druckes dann im weiteren Verpressungsablauf aber verhindert.

Versuche haben ergeben, dass auch gepregte Materialien durch die erfindungsgemäße Behandlung positiv bei der Drapierung zu beeinflussen sind. Dieses Verfahren bezieht sich auch auf Vormaterialien unterschiedlicher Faserfeinheit in Mischform oder Mischlagen, vernähten Gelegen oder auch gewebtem Vormaterial und ähnlichen Gelegen.

In Versuchen und im Rahmen von Recherchen sowie Analysen hat sich als vorteilhaft herausgestellt, entweder ganzflächige Wirrfädenfolien, oder auch Wirrfädenfolien in Teilflächen zur Filamenthaltung einzusetzen.

Die Wirrfäden sind als Folie, als poröse Folie, als Flies oder als Sprühfaserauftrag erfindungsgemäß bevorzugt einzubringen.

Die Fasern der Wirrfäden können aus allen Faserarten bestehen, so z.B. aus:
- Mineralischen Fasern
- Tierischen Fasern
- Pflanzlichen Fasern
- Chemischen Fasern.

Hierbei ist die Ausführung der Wirrfäden mit klebender Beschichtung, z.B. in einem Sprühauftrag vorgesehen, wie auch als Faser in verbindenden Harzen, Resinen.

Der Sprühauftrag kann dergestalt sein, dass zunächst die mit Wirrfäden zu belegende Fläche mit einem ausgewählten flüssigen und pulverartigen Material besprüht, belegt wird, dann ein Wirrfädenauftrag per Versprühung erfolgt und, wenn es sich als notwendig herausstellt, wiederum ein Flüssigkeits- oder Sprühauftrag erfolgt.

Die eingesetzten Wirrfasern können an der nachfolgend geforderten Festigkeit zu beteiligen sein, oder aber auch in der Art sein, dass sie sich in einem Erwärmungsprozess, z.B. bei der Verpressung durch einen beheizbaren Stempel oder/und Form auflösen.

Die so nun beschriebene Grundlage ist einsetzbar z.B. in schichtigen Laminaten in der Art, dass sie in jeder Schicht des Laminates an gleicher Stelle angeordnet sind, an vorgedacht veränderlichen Stellen, schichtweise in flächiger Gestalt, Auftragsdicke, Fasermenge oder Fläche sich verändern, so sich also den vorberechneten Gegebenheiten und statischen Anforderungen anpassen.

Filamenthaltende Anordnung durch z.B. Wirrfasern sind in den Schichten so aufzubauen, dass sie sich nach Möglichkeit im fertigen Produkt nicht nach außen abzeichnen, vorzugsweise also unter der letzten Faserschicht mit der Klebeseite nach oben/außen.

Bei aufgesprühten Wirrfasern ist vorgesehen, den Fasergehalt regelbar nach Fasermenge und Flächengröße je nach Anforderung an das Produkt aufzutragen.

Als wirkungsvoll hat sich eine unterschiedliche Länge der Einzelfäden (Wirrfasern) in Mischung bis zu einer Länge von max. einem Zentimeter herausgestellt, wobei größere Längen nicht ausgeschlossen sind.

Wirrfaserschichten, Wirrfaseraufträge durch Versprühen oder bestehend aus Wirrfaservliesen können aus Kohlenstofffasern, Vorstufenfasern von Kohlenstofffasern, Keramikfasern, Glasfasern, Polymerfasern (z. B. Aramid) und deren Gemischen bestehen.

Vorgenannte Laminataufbauten können in den Einzellagen oder insgesamt, auch durch Vernadelungen ganzflächig oder teilweise flächig gehalten werden.

Eine Verbindung mittels Verklebung durch Haftfadengitter, Wirrfäden oder unter Verwendung warmschmelzender Bindefäden bringt jedoch bessere Ergebnisse.

Nach einem Schmelzen oder Zersetzen von Klebstoff oder warmschmelzenden Bindefäden ist darauf zu achten, dass keine oder zu vernachlässigende Rückstände auf dem Fasergelege verbleiben

### Beispiel Autodach aus MD unvernähtem Karbonlaminat mit Wirrfaserzonen:

Laminate mit Wirrfaserhaltungen, wie z. B. Vliesen und Matten, sind quasiisotrop. Aufgrund der chaotischen Verteilung der Fasern in der Ebene besitzen sie keine Vorzugsrichtung.

Sie sind bezüglich ihrer Festigkeits- und Steifigkeitseigenschaften, aufgrund der kurzen Faserlängen, den geschichteten, anderen quasiisotropen Laminaten aus z.B. MD-Gelegen unterlegen. In gezielt angewandten Ergänzungen aber von Vorteil.

Das Bild zeigt die möglichen Wirrfaserzonen am Beispiel eines Karbonautodaches. Diese Zonen sind die, die am intensivsten einer Drapierung und Faserverschiebung unterworfen sind.

Jede andere Form und Ausbildung ist unter den hier beschriebenen Umständen vorgesehen und möglich.

Die Erfindung sieht weiterhin am Beispiel eines Autodaches vor, dass in einer Art Fließbandsystem Lage für Lage bis zur notwendigen Lagenanzahl UDs oder MDs unvernäht oder auch vernäht in vorbestimmter Art und Weise aufeinander gebracht werden. Das Fließbandsystem soll fortlaufend oder auch alternierend zu mehrschichtigen Laminaten führen.

Hierbei können sich im Schichtenaufbau komplett mit einem Wirrfadensystem versehene Schichten oder auch teilweise mit einem Wirrfadensystem versehene Schichten befinden.

Die Art des Auftrages an Wirrfäden richtet sich nach den Anforderungen an das fertige Produkt.

Nachdem die erforderliche und ausgestaltete Anzahl an Lagen hergestellt ist, wird das Gelege an vorbestimmter Stelle geschnitten und einer Verpressung mir Mulde und Stempel zugeführt.

Mulde und Stempel sind jeweils in erforderlicher Temperatur flächig oder auch teilflächig gleich oder unterschiedlich gewärmt oder erhitzt.

Versuchsweise hat es sich als vorteilhaft herausgestellt, sich bei der Schichtenhaftung eine elektrostatische Haftung nutzbar zu machen.

Hierbei ist der umgekehrte Effekt zu beachten, dass eine elektrostatische Aufladung eigentlich unerwünscht die Haftung von Partikeln, Puder, Staub oder Fussel begünstigt.

Im Endzustand sind zur Entladung geeignete Maßnahmen wie lonisatoren anzuwenden um die Haftung generell aber gezielt aufzuheben.

Die Erfindung beinhaltet auch ein Verfahren zur Berechnung von Nähpfaden, Nähmustern bzw. Drapierungszonen basierend auf der gegebenen Bauteilgeometrie und dessen Implementierung in ein Computer-Programm.

Hierin ist des Weiteren die Entwicklung einer einfachen grafischen Benutzeroberfläche enthalten.

Nähte schränken andererseits die Drapierbarkeit des Geleges ein. Eine Software berechnet, an welchen Stellen und entlang welcher Pfade optimalerweise Nähte anzubringen sind, sodass das Gelege einerseits handhabbar ist, andererseits aber bestmöglich in die Form des herzustellenden Bauteils drapiert werden kann.

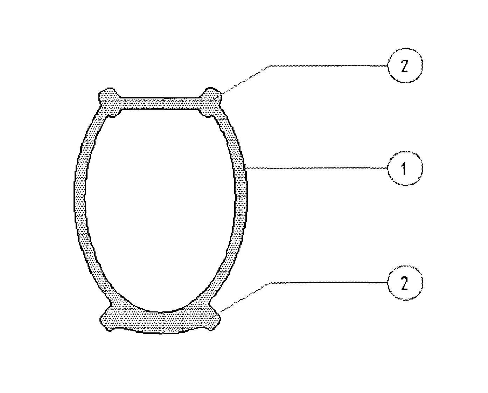

## Patentansprüche

1. Mehrschichtlaminat oder Verstärkungsfaserstruktur als Bauteil oder flächigem Material für hochfeste Bauteile,
**dadurch gekennzeichnet,**
**dass** sich ein Aufbau aus Lagen oder Schichten ergibt, die einmal aus erforderlichen Faserausrichtungen bestehen, aber auch Lagen und Schichten aufweisen, die Faser- bzw. Filamenthaltungen zur Folge haben und durch Verpressung unter Hitzeeinwirkung in die endgültige Form gebracht werden.

2. Mehrschichtlaminat oder Verstärkungsfaserstruktur nach Anspruch 1,
**dadurch gekennzeichnet,**
**dass** aus allen der zuvor beschriebenen möglichen Ausgestaltungen der Einzellagen ein gesamter Lagen- und Schichtenaufbau nach und nach erstellt ist, bis alle mechanische statischen und sonstige Ansprüche an das zu erzielende Produkt erfüllt sind. So als kontinuierlicher oder alternierender "endloser" Ablauf zur Flächen- oder auch Rollenware.

3. Mehrschichtlaminat oder Verstärkungsfaserstruktur nach Anspruch 1 oder einem der vorigen Ansprüche,
**dadurch gekennzeichnet,**
**dass** die Faser- oder Filamenthaltung durch Wirrfasern, Wirrfaseraufträgen oder Wirrfaserfolien erfolgt.

4. Mehrschichtlaminat oder Verstärkungsfaserstruktur nach Anspruch 1 oder einem der vorigen Ansprüche,
**dadurch gekennzeichnet,**
**dass** die Faser- oder Filamenthaltung durch Wirrfasersprühaufträge erfolgt.

5. Mehrschichtlaminat oder Verstärkungsfaserstruktur nach Anspruch 1 oder einem der vorigen Ansprüche,
**dadurch gekennzeichnet,**
**dass** Drapierungszonen durch vorberechnete Nähpfade und differenzierte Vernähung optimiert werden.

6. Mehrschichtlaminat oder Verstärkungsfaserstruktur nach Anspruch 1 oder einem der vorigen Ansprüche,
**dadurch gekennzeichnet,**
**dass** Drapierungszonen durch geeignete Maßnahmen elektrostatisch zur Faser, bzw. Filamenthaltung beeinflusst werden.

7. Mehrschichtlaminat oder Verstärkungsfaserstruktur nach Anspruch 1 oder einem der vorigen Ansprüche,
**dadurch gekennzeichnet,**
**dass** sich im Erwärmungsprozess auflösende Wirrfäden verwandt werden.

8. Mehrschichtlaminat oder Verstärkungsfaserstruktur nach Anspruch 1 oder einem der vorigen Ansprüche,
**dadurch gekennzeichnet,**
**dass** in einer Formverpressung zeitliche Abläufe, ausgeübte Druckverhältnisse je nach Bauteilanspruch vorgegeben werden.

9. Mehrschichtlaminat oder Verstärkungsfaserstruktur nach Anspruch 1 oder einem der vorigen Ansprüche,
**dadurch gekennzeichnet,**
**dass** Faser- oder Filamenthaltungen nicht an eine parallele oder geradlinige Ausrichtung gebunden sind, sondern je nach Bauteilanspruch, Kräftewirkrichtungen auch z.B. wellenförmig und gradlinig sein können.

10. Mehrschichtlaminat oder Verstärkungsfaserstruktur nach Anspruch 1 oder einem der vorigen Ansprüche,
**dadurch gekennzeichnet,**
**dass** auch gepregte Lagen so wie zuvor beschrieben verarbeitet bzw. verwandt werden.

11. Mehrschichtlaminat oder Verstärkungsfaserstruktur nach Anspruch 1 oder einem der vorigen Ansprüche,
**dadurch gekennzeichnet,**
**dass** auch thermoplastische Lagen so wie zuvor beschrieben verarbeitet bzw. verwandt werden, die luftdurchlässig porig sind.

12. Mehrschichtlaminat oder Verstärkungsfaserstruktur nach Anspruch 1 oder einem der vorigen Ansprüche,
**dadurch gekennzeichnet,**
**dass** auch thermoplastische Lagen so wie zuvor beschrieben verarbeitet bzw. verwandt werden.

13. Mehrschichtlaminat oder Verstärkungsfaserstruktur nach Anspruch 1 oder einem der vorigen Ansprüche,
**dadurch gekennzeichnet,**
**dass** Wirrfasersprühaufträge regelbar in Fasergehalt im Auftragsvolumen aufgebracht werden.

14. Mehrschichtlaminat oder Verstärkungsfaserstruktur nach Anspruch 1 oder einem der vorigen Ansprüche,
**dadurch gekennzeichnet,**
**dass** Wirrfasersprühaufträge regelbar in Form, Art und Fläche auf den Einzellagen aufgebracht werden.

15. Mehrschichtlaminat oder Verstärkungsfaserstruktur nach Anspruch 1 oder einem der vorigen Ansprüche,
**dadurch gekennzeichnet,**
**dass** Faser- und Filamenthaltung durch elektrostatische Aufladungen ermöglicht werden.
